# EUROPÄISCHE PATENTSCHRIFT

(11) **EP 2 540 763 B1**
(45) Veröffentlichungstag und Bekanntmachung des Hinweises auf die Patenterteilung: **18.09.2013**
(21) Anmeldenummer: 11188424.3
(22) Anmeldetag: 09.11.2011
(51) Int. Cl.: C08G 77/06

(54) **Verfahren zur Herstellung von Organopolysiloxanen**
Method for manufacturing organopolysiloxanes
Procédé destiné à la fabrication d'organopolysiloxanes

(30) Priorität: 01.07.2011 DE 102011078544
(43) Veröffentlichungstag der Anmeldung: 02.01.2013
(73) Patentinhaber: Wacker Chemie AG, 81737 München (DE)
(72) Erfinder: Staiger, Gerhard, 84375 Kirchdorf (DE)
(74) Vertreter: Fritz, Helmut

(56) Entgegenhaltungen:
- DE-A1-102007 004 838

## Beschreibung

Die Erfindung betrifft ein mehrstufiges Verfahren zur Herstellung von organopolysiloxanen durch Hydrolyse und Kondensation von Chlorsilanen. Es ist dadurch gekennzeichnet, dass die in das Verfahren eingesetzte Chlorsilane Tetrachlorsilan und Monochlorsilan enthalten. Statt Monochlorsilan kann auch dessen Hydrolyseprodukt Disiloxan eingesetzt werden. Aufgrund der nach Hydrolyse und Kondensation resultierenden verzweigten Strukturen handelt sich bei den erfindungsgemäßen Organopolysiloxanen somit um Siliconharze, die Q-Einheiten (tetrafunktionelle Siloxygruppen) und M-Einheiten (monofunktionelle Siloxygruppen) enthalten (MQ-Harze).

Es sind 3 grundsätzlich unterschiedliche Verfahren zur Herstellung von MQ-Harzen bereits bekannt.

Die Herstellung durch Ansäuern und Polymerisation von Natriumsilicaten in wässriger Lösung und anschließender Zugabe eines monofunktionellen Silans bzw. eines Disiloxans wird z. B. in US2009093605 (s. a. dort zitierte Literatur) beschrieben. Nachteil dieses Verfahrens sind die schlechten Raum-Zeit-Ausbeuten sowie die Gefahr der Gelbildung, falls kritische Verfahrensparameter nicht eingehalten werden. Darüber hinaus entstehen erhebliche Mengen an Natriumsalzen.

Ein weiterer grundsätzlich gangbarer Weg zu MQ-Harzen (DE4216139) besteht in der Hydrolyse und Kondensation von Alkylsilicaten in Gegenwart von Säure und monofunktionellem Silan bzw. Disiloxan. Nachteil dieses Verfahrens ist die zusätzlich notwendige Herstellung des Alkylsilikats aus Tetrachlorsilan und der Verlust des dabei eingesetzten Ethanols in der Folgereaktion. Dadurch fallen zusätzliche Kosten an.

Ein prinzipiell kostengünstigeres Herstellverfahren, das u. a. MQ-Harze direkt aus den Chlorsilanen zugänglich macht, wird in DE102005003899 (s. insbes. Beispiel 5, Beispiel 6) beschrieben. Nachteil dieses Verfahrens ist die heikle Prozessführung in der Reaktionskolonne; bei (temporärer) mangelnder Trennwirkung der Kolonne entstehen sehr schnell Gelprodukte, die nur mühsam wieder zu entfernen sind.

In DE102007004838 A1 wird die Herstellung von Siliconharzen aus Chlorsilanen über einen Teilalkoxylierungsschritt beschrieben. Bei diesem Verfahren, das den nächsten Stand der Technik zum erfindungsgemäßen Verfahren darstellt, werden bei Einsatz von Tetrachlorsilan als Chlorsilan allerdings erhebliche Mengen an Gelprodukten erhalten, die die industrielle Produktion erheblich erschweren.

Gegenstand der vorliegenden Erfindung ist ein Verfahren zur Herstellung von Organopolysiloxanen, wobei in einem ersten Schritt Tetrachlorsilan mit einem Gemisch aus 1,0 bis 7,0 Mol einwertigem Alkohol je Mol Tetrachlorsilan und 0 bis 2 Mol Wasser, bevorzugt 0,8 Mol bis 1,2 Mol Wasser, je Mol Tetrachlorsilan umgesetzt wird, wobei die Reaktionstemperatur in einem Bereich von 25 - 60°C liegt und wobei der Abgasdruck vorzugsweise zwischen 1000 und 1500 hPa liegt, in einem zweiten Schritt das im ersten Schritt erhaltene Reaktionsgemisch ("Teilalkoxylat") mit einem in Wasser unlöslichen organischen Lösungsmittel mit einer Dichte von unter 0,95 kg/l sowie mit einem monofunktionellen Silan der Formel R₃SiX vermischt wird, wobei R gleich oder verschieden sein kann und einen einwertigen organischen Rest oder Wasserstoff und X eine hydrolysierbare Gruppe wie z. B. Chlor oder OR bedeutet, wobei dieser Mischung unter Rühren Wasser in Mengen von 0,2 bis 100 Mol Wasser je Mol Si-Komponente zudosiert wird, und wobei in einem dritten Schritt nach Beendigung der Hydrolysewasserzugabe gegebenenfalls nochmals ein monofunktionelles Silan der Formel R₃SiX oder ein Disiloxan mit der Formel R₃SiOSiR₃ zugegeben werden kann, wobei R, X die oben angegebene Bedeutung haben,
das dadurch gekennzeichnet ist, dass die Einsatzmenge des im zweiten Schritt zugegebenen monofunktionellen Silans zwischen 0,43 und 2 Mol bezogen auf 1 Mol Tetrachlorsilan liegt.

Insbesondere ein Verfahren zur Herstellung von MQ-Harzen, die gegebenenfalls noch zusätzliche Blöcke aus RR'SiO2/2-Einheiten aufweisen und das die für den Stand der Technik charakteristischen Nachteile nicht aufweist.

Bei dem erfindungsgemäßen Verfahren wird in einem ersten Schritt Tetrachlorsilan mit einem Gemisch aus vorzugsweise 1,0 bis 7,0 Mol bevorzugt 1,2 bis 6,4 Mol, besonders bevorzugt 1,5 bis 5,0 Mol einwertigem Alkohol je Mol Tetrachlorsilan und vorzugsweise 0 bis 2 Mol Wasser, bevorzugt 0,5 Mol bis 1,5 Mol besonders bevorzugt 0,8 Mol bis 1,2 Mol Wasser, je Mol Tetrachlorsilan umgesetzt. Die Reaktionsführung erfolgt bevorzugt in der Weise, dass Silan und Alkohol/Wasser-Gemisch gleichzeitig in ein Reaktionsgefäß zudosiert werden, das vorzugsweise schon Umsetzungsprodukt enthält. Bevorzugter Alkohol ist Ethanol. Die Reaktionstemperatur liegt in einem Bereich von vorzugsweise 25 - 60°C, bevorzugt zwischen 30 und 55°C besonders bevorzugt 35 und 45°C. Sie kann gegebenenfalls durch externe Heizung auf den gewünschten Wert eingestellt werden. Der Abgasdruck liegt vorzugsweise zwischen 800 und 2000 hPa, bevorzugt 1000 und 1500 hPa, besonders bevorzugt 1100 und 1400 hPa.

In einem zweiten Schritt wird das in der ersten Stufe erhaltene Reaktionsgemisch ("Teilalkoxylat") mit einem in Wasser unlöslichen organischen Lösungsmittel mit einer Dichte von vorzugsweise unter 0,95 kg/l sowie mit einem monofunktionellen Silan der Formel R₃SiX oder einem Disiloxan der Formel R₃SiOSiR₃ vermischt, wobei R gleich oder verschieden sein kann und einen einwertigen organischen Rest oder Wasserstoff und X eine hydrolysierbare Gruppe wie z. B. Chlor oder OR bedeutet. Kennzeichnend für das erfindungsgemäße Verfahren ist, dass das Molverhältnis der Einsatzmengen von monofunktionellem Silan und Tetrachlorsilan zwischen vorzugsweise 0,43 und 2, bevorzugt 0,45 und 1,5, besonders bevorzugt 0,5 und 1 liegt und der Zusatz des monofunktionellen Silans vorzugsweise vor Wasserzugabe zu erfolgen hat. Das monofunktionelle Silan kann durch die entsprechende (halbe) Molmenge an Disiloxan der Formel R₃SiOSiR₃ ersetzt werden, wobei die Einsatzmenge des im zweiten Schritt zugegebenen Disiloxans zwischen vorzugsweise 0,22 und 1, bevorzugt 0,225 und 0,75, besonders bevorzugt 0,25 und 0,5 Mol bezogen auf 1 Mol Tetrachlorsilan liegt.

Gegebenenfalls können dieser Mischung noch vor, während oder nach der Wasserdosierung zweiwertige Silane der Formel R₂SiX₂ oder deren Hydrolysenprodukte R'(R₂SiO_{2/2})ₙR' zugesetzt werden, wobei R, X die oben angegebene Bedeutung haben und R' vorzugsweise ein einwertiger organischer Rest, bevorzugt ein Methyl- oder Vinylrest, besonders bevorzugt ein Methylrest oder Wasserstoff ist und n eine Zahl zwischen vorzugsweise 3 und 10000 bevorzugt 20 und 1000, besonders bevorzugt 50 und 500 bedeutet.

Dieser Mischung wird unter Rühren Wasser in Mengen von vorzugsweise 0,2 bis 100 Mol, bevorzugt 1 bis 10 Mol, besonders bevorzugt 2 bis 4 Mol Wasser je Mol Si-Komponente zudosiert, wobei gegebenenfalls einem Teil oder der gesamten Menge des Wassers zuvor Alkohol in einem Mengenverhältnis Alkohol/Wasser von vorzugsweise 0,2/0,8 bis 0,8/0,2 zugemischt worden ist. Bevorzugt ist, die erste Hälfte des Hydrolysewassers abgemischt mit derselben Menge Alkohol zuzudosieren.

In einem dritten Schritt kann nach Beendigung der Hydrolysereaktion gegebenenfalls nochmals ein monofunktionelles Silan der Formel R₃SiX oder ein Disiloxan mit der Formel R₃SiOSiR₃ zugegeben werden, wobei R, X die oben angegebene Bedeutung haben. Dadurch lässt sich der Gehalt an restlichen Silanolgruppen im Endprodukt gegenüber dem Stand der Technik weiter erniedrigen. Die Einsatzmenge des monofunktionellen Silans liegt im dritten Schritt im Bereich von vorzugsweise 0 - 20 mol%, bevorzugt 0 - 10 mol%, 0,5 - 10 mol%, besonders bevorzugt 1 -5 mol% bezogen auf eingesetztes Tetrachlorsilan. Die Einsatzmenge des Disiloxans mit der Formel R₃SiOSiR₃ liegt im Bereich von vorzugsweise 0 - 10 mol%, bevorzugt 0 - 5 mol%, 0,25 - 5 mol% besonders bevorzugt 0 - 2,5 mol%, 0,5 - 2,5 mol% bezogen auf eingesetztes Tetrachlorsilan.

Zur Beendigung der Reaktion wird mit einem Überschuss an Wasser die Säurekonzentration soweit erniedrigt, dass in der wässrig-alkoholischen Phase die HCl-Konzentration unter 15 Gew.% liegt. Die organische Phase wird abgetrennt und neutralisiert und das Lösemittel gegebenenfalls abdestilliert.

Falls das entsprechend dem erfindungsgemäßen Verfahren erhaltene Harz keine SiH-Funktionen enthält (d. h., dass R nicht gleich Wasserstoff ist), kann eine alkalische Nachequilibrierung angeschlossen werden, um das Molekulargewicht zu erhöhen und den Silanolgehalt weiter zu erniedrigen.

Dazu wird das im dritten Schritt erhaltene Reaktionsprodukt in Anwesenheit von Base, ausgewählt aus der Gruppe, bestehend aus Natriumhydroxid, Kaliumhydroxid und Tetramethylguanidin, und einem wasserunlöslichen organischen Lösungsmittel, insbesondere Toluol, Xylol oder Trimethylbenzol, bei Siedetemperatur der Lösung und einem Druck zwischen vorzugsweise 900 und 2000 hPa, bevorzugt 900 und 1500 hPa, besonders bevorzugt 900 und 1200 hPa umgesetzt, wobei Wasser sowie Alkohol vollständig bzw. nahezu vollständig abdestilliert wird.

Beispiele für Reste R, R¹ sind neben Wasserstoff Alkylreste, wie der Methyl-, Ethyl-, n-Propyl-, iso-Propyl-, n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl-, 5-Hexenyl-, Allyl- sowie Acryloxyalkyl- und Methacryloxyalkylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Bevorzugt handelt es sich bei dem Rest R, R¹ um Kohlenwasserstoffreste mit 1 bis 8 Kohlenstoffatomen, besonders bevorzugt um den Methyl- und Vinylrest sowie den Methacryloxypropylrest.

Das Verfahren ist dadurch ausgezeichnet, dass der Anteil insgesamt eingesetzter tetrafunktioneller Siloxaneinheiten zwischen vorzugsweise 10 und 70 mol%, bevorzugt 30 und 65 mol%, besonders bevorzugt 50 und 65 mol%. liegt und das Molverhältnis von M- zu Q-Einheiten während der Wasserzugabe im 2. Schritt zwischen vorzugsweise 3/7 und 2/1 und nach Abschluss des dritten Schritts zwischen 35/65 und 2/1, bevorzugt zwischen 4/6 und 1/1 liegt.

Beispiele für einwertige Alkohole, die im ersten Schritt des erfindungsgemäßen Verfahrens eingesetzt werden können, sind alle bei einer Temperatur von 20°C und einem Druck von 900 bis 1100 hPa flüssigen Alkohole, wie Methanol, Ethanol, n-Propanol, i-Propanol, Butanol, Pentanol, Hexanol, Heptanol, wobei Methanol, Ethanol und Butanol bevorzugt sind und Ethanol besonders bevorzugt ist.

Falls erwünscht, können im ersten Schritt des erfindungsgemäßen Verfahrens zusätzlich zu Tetrachlorsilan, Wasser und Alkohol auch weitere Stoffe eingesetzt werden. Beispiele für gegebenenfalls eingesetzte weitere Stoffe sind wasserunlösliche organische Lösungsmittel, wie Toluol, oder Alkoxysilane, wie Tetraethoxysilan oder weitere Chlorsilane, wie Trimethylchlorsilan oder Vinyldimethylchlorsilan.

Im ersten Schritt des erfindungsgemäßen Verfahrens werden Silan, Wasser, Alkohol und gegebenenfalls weitere Stoffe auf beliebige Art und Weise miteinander vermischt und reagieren gelassen, wobei Tetraalkoxysilan, Alkoxychlorsilane und deren Hydrolysate und Kondensate sowie in gasförmiger Form Chlorwasserstoff, Alkylchlorid und Dialkylether entstehen. Dabei kann das im ersten Schritt anfallende Chlorwasserstoffgas direkt in anderen Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Der erste Schritt kann diskontinuierlich oder kontinuierlich durchgeführt werden, wobei bei der diskontinuierlichen Verfahrensweise bevorzugt gerührt wird.

Bevorzugt wird der erste Schritt des erfindungsgemäßen Verfahrens jedoch kontinuierlich in einem Loop-Reaktor durchgeführt, besonders bevorzugt ohne Eintrag von mechanischer Energie, d.h. nur mit Naturumlauf.

Bei der im ersten Schritt erhaltenen Reaktionsmischung besteht die Siliciumkomponente im Wesentlichen aus chlor-, hydroxy- und alkoxyfunktionellen Silanen und Oligosiloxanen sowie gegebenenfalls Cyclosiloxanen. Des Weiteren enthält die Reaktionsmischung Wasser, Alkohol, Chlorwasserstoff und in geringen Mengen Alkylchlorid, Dialkylether und gegebenenfalls weitere Stoffe.

Im Rahmen der vorliegenden Erfindung sind, falls jeweils nicht anders angegeben, alle Mengen- und Prozentangaben auf das Gewicht und alle Prozentangaben sind auf das Gesamtgewicht bezogen, alle Temperaturen 20°C und alle Drücke 900 bis 1100 hPa (1,013 bar (abs.)). Alle Viskositäten werden bei 25°C bestimmt. Im Rahmen der vorliegenden Erfindung sollen sich Angaben über die Dichte auf eine Temperatur von 20°C und den Druck der umgebenden Atmosphäre, also 900 bis 1100 hPa, beziehen.

Als in Wasser unlösliche organische Lösungsmittel sollen im Rahmen der vorliegenden Erfindung solche Lösungsmittel verstanden werden, bei denen die Löslichkeit bei 25°C und dem Druck der umgebenden Atmosphäre, also 900 bis 1100 hPa, unter 1 g Lösungsmittel/100 g Wasser liegt.

Beispiele für im erfindungsgemäßen Verfahren gegebenenfalls eingesetzte in Wasser unlösliche organische Lösungsmittel sind gesättigte Kohlenwasserstoffe, wie Pentan, Hexan, Heptan oder Octan sowie deren verzweigte Isomeren und Mischungen der gesättigten Kohlenwasserstoffe und aromatische Kohlenwasserstoffe, wie Benzol, Toluol und Xylole, wobei es sich bevorzugt um Toluol handelt.

Im zweiten Schritt des erfindungsgemäßen Verfahrens wird bevorzugt ein wasserunlösliches organisches Lösungsmittel eingesetzt. Die Menge des eingesetzten Lösungsmittels liegt im Bereich der 0,2 bis 100-fachen, bevorzugt der 0,5 bis 5-fachen, besonders bevorzugt 0,7 bis 3-fachen Menge der eingesetzten Silizium-Komponenten.

Kennzeichnend für das erfindungsgemäße Verfahren ist die Zugabe einer ausreichenden Menge eines monofunktionellen Silans der Formel R₃SiX oder eines Disiloxans der Formel R₃SiOSiR₃ vor Beginn der Hydrolysereaktion. Diese Zugabe kann auch schon während des ersten Schritts erfolgen. Hierbei handelt es sich um Mengen von bevorzugt 0,43 bis 2 Mol monofunktionelles Silan bzw. 0,22 bis 1 Mol Disiloxan, bevorzugt 0,45 bis 1,5 Mol monofunktionelles Silan bzw. 0,225 bis 0,75 Mol Disiloxan, besonders bevorzugt 0,5 bis 1 Mol monofunktionelles Silan bzw. 0,25 bis 0,5 Mol Disiloxan bezogen auf 1 Mol im ersten Schritt eingesetztes Tetrachlorsilan. Bei dem monofunktionellen Silan handelt es sich bevorzugt um ein Chlorsilan oder ein Alkoxysilan. R hat die o. a. Bedeutungen.

Vorzugsweise wird bei dem erfindungsgemäßen Verfahren ein Monoalkylsilan vorzugsweise in Mengen von 0 - 20 mol%, bevorzugt 0 - 10 mol% eingesetzt, besonders bevorzugt wird kein Monoalkylsilan eingesetzt.

In einer bevorzugten Ausführungsform des erfindungsgemäßen Verfahrens wird im zweiten Schritt das im ersten Schritt erhaltene Reaktionsgemisch nach Zugabe des monofunktionellen Silans gegebenenfalls mit Toluol vermengt und Wasser über einen definierten Zeitraum zudosiert, wobei der Mischungsvorgang mittels Eintrag von mechanischer Energie, z.B. einem Rührer, durchgeführt wird.

Falls erwünscht, können im zweiten Schritt des erfindungsgemäßen Verfahrens auch weitere Stoffe eingesetzt werden. Beispiele für gegebenenfalls eingesetzte weitere Stoffe sind insbesondere Polysiloxane der Formel R'O(R₂SiO)ₙR', wobei R' die o. a. Bedeutungen von R hat oder eine R₃SiO-Gruppierung ist, und n eine Zahl im Bereich von vorzugsweise 3 bis 10.000, bevorzugt 5 bis 5.000, besonders bevorzugt 50 bis 5.000 ist. Besonders bevorzugte Bedeutungen von R' sind die Wasserstoff- oder die Trimethylsilylgruppe.

Falls weitere Stoffe in der zweiten Stufe eingesetzt werden, handelt es sich um Mengen von bevorzugt 0,01 bis 1000 Gewichtsteilen, besonders bevorzugt von 10 bis 50 Gewichtsteilen, bezogen auf 100 Gewichtsteile der im ersten Schritt eingesetzten Silicium-Komponente.

Als weitere Stoffe, die in der zweiten Stufe zugesetzt werden können, sind acrylat- oder methacrylatfunktionelle Silane bevorzugt. Beispiele hierfür sind Methacryloxypropyltrimethoxysilan, Methacryloxypropyl-dimethylmethoxysilan, Acryloxypropyl-trimethoxysilan. Diese werden vorzugsweise in einer Menge von 1 - 20 mol%, besonders bevorzugt 2 - 15 mol%, bevorzugt in einer Menge von 5 - 15 Mol%, ganz besonders bevorzugt 5 - 10 mol% bezogen auf Tetrachlorsilan eingesetzt.

In einer weiteren besonders bevorzugten Ausführungsform des erfindungsgemäßen Verfahrens wird das in der zweiten Stufe eingesetzte Wasser von oben in den Reaktor dosiert, wobei gleichzeitig gerührt wird.

Der zweite Schritt des erfindungsgemäßen Verfahrens wird vorzugsweise bei einer Temperatur von 0 bis 100°C, insbesondere 20 bis 80°C, besonders bevorzugt 20 bis 60°C und einem Druck von bevorzugt 500 und 2000 hPa, besonders bevorzugt 600 bis 1500 hPa, besonders bevorzugt 800 bis 1400 hPa durchgeführt.

Im dritten Schritt des erfindungsgemäßen Verfahrens wird gegebenenfalls nach weiterem Zusatz eines monofunktionellen Silans der Formel R₃SiX bez. eines Disiloxans der Formel R₃SiOSiR₃, wobei R, X die oben angegebene Bedeutung haben, die Hydrolyse /Kondensationsreaktion mittels bekanntem Verfahren, z. B. durch Verdünnen mit überschüssigem Wasser oder Neutralisation des Reaktionsgemischs mit Natronlauge, beendet.

Im dritten Schritt des erfindungsgemäßen Verfahrens erfolgt die Trennung der gegebenenfalls lösungsmittelhaltigen Siloxanphase von der wässrig-alkoholischen Chlorwasserstoffphase. Dies kann nach dem Fachmann bekannten Methoden erfolgen, wie z.B. 5 bis 60 minütiges Ruhen lassen des Reaktionsgemisches, bis sich die Phasen separiert haben. Die Phasen werden dann separat abgelassen und aufgearbeitet.

Die so erhaltene Siloxanphase kann nun nach beliebigen und an sich bekannten Verfahren aufgearbeitet werden, wie z.B. Neutralisation, Filtration und Abtrennung aller leichtflüchtigen Bestandteile, bevorzugt durch Destillation. Bei den leichtflüchtigen Bestandteilen handelt es sich im Wesentlichen um das in Wasser unlösliche organische Lösungsmittel mit einer Dichte von unter 0,95 kg/l. Des Weiteren kann man beispielsweise aus der Siloxanphase durch Entfernen des Lösungsmittels, etwa durch Destillation in einem Dünnschichtverdampfer, die Konzentration erhöhen und so Organopolysiloxanlösungen herstellen oder auch das Lösungsmittel ganz entfernen und so lösemittelfreie Siloxane erhalten.

Nach dem erfindungsgemäßen Verfahren können Siloxanharze, die neben M- und Q-Einheiten noch eine Vielzahl anderer Struktureinheiten enthalten können, mit definierten Eigenschaften reproduzierbar hergestellt werden. Als weitere Struktureinheiten kommen bevorzugt Alkenylreste sowie Si-Wasserstoffreste in Betracht.

Zugänglich werden nach dem erfindungsgemäßen Verfahren auch Siloxanharze, die aus Blöcken von MQ-Einheiten und Blöcken von D-Einheiten ("PDMS"-Blöcke) zusammengesetzt sind. Diese MQ-PDMS-Blockcopolymere finden Anwendung z. B. in Siliconklebeharzen (s. z. B. EP0816463) oder in sog. CRAs ("controlled release additives") in Dehäsiv-Beschichtungen. PDMS bedeutet in diesem Zusammenhang ein Polysiloxan mit der Formel R(R₂SiO)ₙR, wobei R und n die o. a. Bedeutungen haben.

Länge und Zusammensetzung des PDMS-Blocks im Copolymeren wird durch die im 2. Schritt ("Hydrolyseschritt") des Verfahrens eingesetzte PDMS-Komponente bestimmt. So werden mit einer kurzkettigen PDMS-Komponente kurze PDMS-Blöcke im Copolymeren gebildet, lange PDMS-Komponenten führen unter gleichen Reaktionsbedingungen zu längeren PDMS-Blöcken. Daneben ist der Zugabezeitpunkt im Verlauf des 2. Reaktionsschritts von Bedeutung: Wird die PDMS-Komponente vor oder bei Beginn der Hydrolysewasserzugabe zum Reaktionsmedium gegeben, so wird der Block der D-Einheiten zu kleineren Ketten equilibriert als wenn die PDMS-Komponente erst am Ende der Hydrolyse kurz vor Abbruch der Reaktion durch Zugabe von überschüssigem Wasser zugegeben wird.

Die PDMS-Komponente kann gemäß Formel (R₂SiO)ₙ zu einem Anteil von 0 bis 100% aus RHSiO-Einheiten bestehen.

Das in Form einer organischen Lösung vorliegende, gegebenenfalls PDMS-Blöcke enthaltende Polyorganosiloxanharz kann in einem 4. Schritt durch Zusatz einer basisch reagierenden Verbindung auf einen pH-Wert größer 7 eingestellt und unter Abtrennung eines Alkohol/Wasser/Lösemittel-Gemisches kondensiert werden. Das erhaltene Produkt kann weiterhin durch Zugabe einer Säure und/oder Säure abspaltenden Verbindung neutralisiert werden. Anschließend kann gegebenenfalls noch enthaltenes Wasser und ein Teil des Lösemittels entfernt sowie unlösliche Bestandteile abgetrennt werden. Die Kondensation wird vorzugsweise im pH-Bereich von 8 bis 14, bevorzugt 8 bis 12, besonders bevorzugt 8 bis 10 und bei Rückflußtemperaturen von Toluol, Xylol oder Trimethylbenzol, beispielsweise im Bereich zwischen 100 und 180°C, bevorzugt 120 und 180°C, besonders bevorzugt 140 und 160°C und einem Druck zwischen 900 und 2000 hPa, bevorzugt 900 und 1500 hPa, besonders bevorzugt 900 und 1300 hPa durchgeführt. Als Katalysatoren können alle für diese Reaktion bekannten Verbindungen eingesetzt werden, bevorzugt sind Alkalihydroxide, wie Natrium- oder Kaliumhydroxid, oder Aminoverbindungen, wie zum Beispiel Tetramethylguanidin. Zur nachfolgenden Neutralisation wird üblicherweise Salzsäure verwendet.

Dieser 4. Schritt kann dahingehend modifiziert werden, dass aminofunktionelle Silane der Reaktionsmischung zugefügt werden. Unter den vorangehend beschriebenen Reaktionsbedingungen werden diese Silane in die Harzstruktur als aminofunktionelle Siloxaneinheiten integriert.

Diese aminofunktionellen Silane werden in Mengen von vorzugsweise 0,5 - 25 Gew.%, bevorzugt 1 - 20 Gew.%, besonders bevorzugt 5 - 15 Gew.%, bezogen auf das Polyorganosiloxanharz eingesetzt. Beispiele für aminofunktionelle Silane sind N-(2-aminoethyl)-N'-[3-(trimethoxysilyl)propyl]ethylenediamine, N-(2-aminoethyl)-N'-[3-(triethoxysilyl)propyl]ethylenediamine, 3-(Triethoxysilyl)propylamin.

Vorteilhafterweise wird nach der Neutralisation nochmals azeotrop Wasser entfernt und unlösliche Bestandteile, meist durch die Neutralisation gebildeten Salze, entfernt. Abschließend kann die Harzlösung mit Lösemittel auf die gewünschte Konzentration eingestellt werden und ist damit anwendungsbereit. Bei geeigneter Wahl der MQ- bzw. PDMS-Blöcke können lösemittelfreie Flüssigharze erhalten werden.

Die erfindungsgemäß hergestellten Organopolysiloxane können bei 20°C und einem Druck von 900 bis 1100 hPa fest oder flüssig sein und haben ein durchschnittliches Molekulargewicht gegen Polystyrolstandard gemessen von vorzugsweise 200 bis 100 000 g/mol, besonders bevorzugt 800 bis 20 000 g/mol.

Durch das erfindungsgemäße Verfahren werden erstmals MQ-Harze mit einer sehr engen Molekulargewichtsverteilung industriell, d.h. ohne zusätzliche Fraktionierungsmethoden wie Chromatographie in überkritischem Kohlendioxid, zugänglich. Sie lassen sich damit vorteilhaft zu Siliconklebeharzen ("Si- pressure sensitive adhesives") weiter verarbeiten (siehe dazu EP0255226). Die Polydispersität (Mw/Mn) der nach dem 4. Schritt (alkalische Nachkondensation) erhaltenen Molekulargewichtsverteilung ist kleiner 2,0.

Bevorzugt handelt es sich bei den erfindungsgemäß hergestellten Organopolysiloxanen um solche der Formel [(R₂SiO)ₙ]ₐ[R₃SiO_{1/2}]_{b}[R₁O_{1/2}]_{d}[HO_{1/2}]ₑ[SiO_{4/2}]_{4-b-c-d} mit R gleich Wasserstoff-, Methyl-, Isooctyl- oder Vinylrest, R1 gleich Methyl-, Ethyl- oder Butylrest, n=2-10000, a=0-2, b=1,4-2,1, d=0-0,5, e=0-0,5, wobei 1,4 < b+c+d.

Die erfindungsgemäß hergestellten Organopolysiloxane können für alle Zwecke verwendet werden, für die auch bisher MQ-Harze eingesetzt worden sind. So können die erfindungsgemäßen Organopolysiloxanharze bzw. -konzentrate beispielsweise als Schaumstabilisatoren, als Zusatz zu Antischaummitteln, Tonern, Lack- und Beschichtungssystemen, wie etwa Papierbeschichtungsmassen verwendet werden. Sie können aber auch anstelle hydrophobierter hochdisperser Kieselsäure als Füllstoffe in Kunststoffen, insbesondere Siliconkautschuk, verwendet werden.

Das erfindungsgemäße Verfahren hat den Vorteil, dass es einfach in der Durchführung ist und MQ-Harze mit einer hohen Ausbeute und sehr kostengünstig hergestellt werden können.

Das erfindungsgemäße Verfahren hat den Vorteil, dass das gegebenenfalls verwendete wasserunlösliche organische Lösungsmittel, der Chlorwasserstoff sowie der Alkohol auf einfache Weise zurück gewonnen werden können.

Mit Hilfe des erfindungsgemäßen Verfahrens werden Organopolysiloxane erhalten, welche eine hohe Lagerstabilität aufweisen und sehr chloridarm sind.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1

In einen 3-Halskolben, versehen mit Rührer, Intensivrückflusskühler, dessen Kühlmittel auf -20°C gekühlt wird, sowie zwei Zulaufgefäßen, werden unter Rühren im Laufe von 15 min gleichzeitig 236 g Tetrachlorsilan und 291 g Ethanol (mit 8 Gew.% Wassergehalt) zudosiert. Die freigesetzte HCl gast über den Kühler (-20°C) aus, kondensierbare Anteile werden in das Reaktionsmedium zurückgeführt, das Reaktionsgemisch erwärmt sich im Laufe der Alkoxylierung auf 38°C. Man lässt weitere 10 min ausgasen und gibt dann 300 g Toluol, 80 g Trimethylchlorsilan sowie 100 g Polydimethylsiloxan, das eine Kettenlänge von ca. 60 Siloxaneinheiten und Silanolendgruppen aufweist, hinzu. Anschließend fügt man während 35 min eine Mischung aus 42 g Ethanol und 42 g Wasser hinzu, danach während weiterer 15 min 44 g Wasser. Nach einer Nachreaktionszeit von 30 min gibt man 13,5 g Trimethylchlorsilan, dann nach weiteren 5 min 200 g Wasser hinzu. Die organische Phase der zweiphasigen Reaktionsmischung wird abgetrennt, mit Aktivkohle (0,25 Gew.%), Natriumhydrogencarbonat (0,4 Gew.%) sowie Filterhilfsmittel vermischt und filtriert. Das Filtrat wird am Rotationsverdampfer bei 175°C, 10 mbar, von Lösemittel befreit. Man erhält 220 g farblose Flüssigkeit der Zusammensetzung M(0,61)QD(0,88), bestehend aus einem molkularen Anteil von 0,61 mol Trimethylsiloxygruppen ("M"), 1 mol Siloxygruppen ("Q")und 0,88 mol Dimethylsiloxygruppen ("D"), mit einer Viskosität von 130 cSt. Mw 2400 g/mol; Mn 1600 g/mol; Kettenlänge der D-Blöcke: ca. 3 Was?; Verhältnis M/Q-Einheiten 0,6.

### Beispiel 2

In einen 3-Halskolben, versehen mit Rührer, Intensivrückflusskühler, dessen Kühlmittel auf -20°C gekühlt wird, sowie zwei Zulaufgefäßen, werden unter Rühren im Laufe von 15 min gleichzeitig 236 g Tetrachlorsilan und 291 g Ethanol (mit 8 Gew.% Wassergehalt) zudosiert. Die freigesetzte HCl gast über den Kühler (-20°C) aus, kondensierbare Anteile werden in das Reaktionsmedium zurückgeführt, das Reaktionsgemisch erwärmt sich im Laufe der Alkoxylierung auf 38°C. Man lässt weitere 10 min ausgasen und gibt dann 300 g Toluol sowie 80 g Trimethylchlorsilan sowie hinzu.
Anschließend fügt man in 25 min eine Mischung aus 42 g Ethanol und 42 g Wasser hinzu, dann während weiterer 25 min 44 g Wasser, dann 100 g Polydimethylsiloxan, das eine Kettenlänge von ca. 60 Siloxaneinheiten und Silanolendgruppen aufweist. Nach 5 min Nachreaktionszeit wird eine Mischung aus 6,75 g Trimethylchlorsilan und 7,5 g Vinyldimethylchlorsilan hinzugefügt. Nach weiteren 15 min Reaktionszeit wird die Hydrolyse-/Kondensationsreaktion durch schnelle Zugabe von 200 g Wasser abgebrochen. Die organische Phase der zweiphasigen Reaktionsmischung wird abgetrennt, mit Aktivkohle (0,25 Gew.%), Natriumhydrogencarbonat (0,4 Gew.%) sowie Filterhilfsmittel vermischt und filtriert. Das Filtrat wird am Rotationsverdampfer bei 175°C, 10 mbar, von Lösemittel befreit. Man erhält 224 g farblose Flüssigkeit der Zusammensetzung M(0,59)Mvi(0,033)QD(0,93) und einer Viskosität von 365 mPa.s (25°C), Mw 4600 g/mol; Mn 2300 g/mol; Kettenlänge der D-Blöcke: ca. 36 Dimethylsiloxyeinheiten.

### Beispiel 3

In einen 3-Halskolben, versehen mit Rührer, Intensivrückflusskühler, dessen Kühlmittel auf -20°C gekühlt wird, sowie zwei Zulaufgefäßen, werden unter Rühren im Laufe von 15 min gleichzeitig 236 g Tetrachlorsilan und 291 g Ethanol (mit 8 Gew.% Wassergehalt) zudosiert. Die freigesetzte HCl gast über den Kühler (-20°C) aus, kondensierbare Anteile werden in das Reaktionsmedium zurückgeführt, das Reaktionsgemisch erwärmt sich im Laufe der Alkoxylierung auf 50°C. Man lässt weitere 10 min ausgasen und gibt dann 300 g Toluol sowie 90 g Trimethylchlorsilan hinzu.
Dazu dosiert man anschließend in 25 min eine Mischung aus 42 g Ethanol und 42 g Wasser, dann während weiterer 25 min 44 g Wasser zu. Anschließend erfolgt noch die Zugabe von 3,3 g Trimethylchlorsilan. Nach einer Reaktionszeit von 30 min bei 40°C bricht man die Reaktion durch Zugabe 200 g Wasser ab und trennt die entstandenen Phasen. Die organische Phase wird mit 0,25 Gew.% Aktivkohle, 0,4 Gew.% Natriumhydrogencarbonat sowie 0,33 Gew.% Filterhilfsmittel versetzt, filtriert und bis zu einem Vakuum von 10 mbar, 175°C, 5 min, eingedampft. Man erhält 143 g zähflüssiges Siliconharz der Zusammensetzung M(0,71)Q mit einer Viskosität von 512.000 mPa.s (40°C), Mw 1600 g/mol, Mn 1300 g/mol.

### Beispiel 4 (alkalische Nachbehandlung von Beispiel 3)

100 g Siliconharz aus Beispiel 3 werden in 50 g Xylol gelöst, die Lösung wird mit 0,4 g 25%iger wässriger KOH-Lösung versetzt und anschließend unter Normaldruck bis zu einer Temperatur von 175 °C eingedampft und 30 min bei dieser Temperatur gehalten. Der Rückstand wird anschließend in 50 g Xylol gelöst, zunächst mit 2 g 20%iger wässriger HCl-Lösung, dann mit 0,25 Gew.% Aktivkohle 0,4 Gew% Natriumhydrogencarbonat sowie 0,33 Gew.% Filterhilfsmittel versetzt und schließlich filtriert. Nach dem Abdampfen des Lösungsmittels erhält man 95 g farblosen Feststoff. Das MQ-Harz der Zusammensetzung M(0,7)Q weist laut Gelpermeationschromatographie folgende Molekulargewichte auf: Mw 4400 g/mol, Mn 2400 g/mol.

### Beispiel 5

In einen 3-Halskolben, versehen mit Rührer, Intensivrückflusskühler, dessen Kühlmittel auf -20°C gekühlt wird, sowie zwei Zulaufgefäßen, werden unter Rühren im Laufe von 15 min gleichzeitig 236 g Tetrachlorsilan und 291 g Ethanol (mit 8 Gew.% Wassergehalt) zudosiert. Die freigesetzte HCl gast über den Kühler (-20°C) aus, kondensierbare Anteile werden in das Reaktionsmedium zurückgeführt, das Reaktionsgemisch erwärmt sich im Laufe der Alkoxylierung auf 50°C. Man lässt weitere 10 min ausgasen und gibt dann 300 g Toluol sowie 80 g Trimethylchlorsilan hinzu.
Dazu dosiert man anschließend in 25 min eine Mischung aus 42 g Ethanol und 42 g Wasser, dann während weiterer 25 min 44 g Wasser zu. Man lässt das Reaktionsgemisch 30 min nachreagieren und fügt dann 15 g Vinyldimethylchlorsilan hinzu. Nach einer Reaktionszeit von 15 min (50°C) werden 200 g Wasser zugegeben und die entstehenden Phasen getrennt. Die organische Phase wird mit Aktivkohle (0,25 Gew.%), Natriumhydrogencarbonat (0,4 Gew.%) sowie Filterhilfsmittel vermischt und filtriert. Das Filtrat wird am Rotationsverdampfer bei 175°C, 10 mbar, von Lösemittel befreit. Man erhält 148 g zähflüssiges Siliconharz der Zusammensetzung (NMR) M(0,78)Mvi(0,14)Q und folgender Molekulargewichte (GPC): Mw 800 g/mol, Mn 700 g/mol.

### Beispiel 6 (alkalische Nachbehandlung des Produkts von Beispiel 5)

100 g Siliconharz aus Beispiel 5 werden in 50 g Xylol gelöst, die Lösung wird mit 0,4 g 25%iger wässriger KOH-Lösung versetzt und anschließend unter Normaldruck bis zu einer Temperatur von 175 °C eingedampft und 30 min bei dieser Temperatur gehalten. Der Rückstand wird anschließend in 50 g Xylol gelöst, zunächst mit 2 g 20%iger wässriger HCl-Lösung, dann mit 0,25 Gew.% Aktivkohle 0,4 Gew% Natriumhydrogencarbonat sowie 0,33 Gew.% Filterhilfsmittel versetzt und schließlich filtriert. Nach dem Abdampfen des Lösungsmittels erhält man 93 g farblosen Feststoff. Dieser weist gemäß NMR-Analytik eine Zusammensetzung (NMR) M(0,75)Mvi(0,15)Q und gemäß GPC folgende Molekulargewichte auf: Mw 4200; Mn 2600.

### Beispiel 7

In einen 3-Halskolben, versehen mit Rührer, Intensivrückflusskühler, dessen Kühlmittel auf -20°C gekühlt wird, sowie zwei Zulaufgefäßen, werden unter Rühren im Laufe von 15 min gleichzeitig 236 g Tetrachlorsilan und 291 g Ethanol (mit 8 Gew.% Wassergehalt) zudosiert. Die freigesetzte HCl gast über den Kühler (-20°C) aus, kondensierbare Anteile werden in das Reaktionsmedium zurückgeführt, das Reaktionsgemisch erwärmt sich im Laufe der Alkoxylierung auf 38°C. Man lässt weitere 5 min ausgasen und gibt dann 300 g Toluol, 20 g 3-Methacryloxypropyltrimethoxysilan (Geniosil^{®} GF31) sowie 80 g Trimethylchlorsilan sowie hinzu.
Dazu dosiert man anschließend in 10 min eine Mischung aus 22 g Ethanol und 45 g Wasser, dann während weiterer 10 min 66 g Wasser zu. Dann fügt man 13,5 g Trimethylchlorsilan und 100 g Polydimethylsiloxan, das eine Kettenlänge von ca. 60 Siloxaneinheiten und Silanolendgruppen aufweist, hinzu. Nach einer Reaktionszeit von 30 min (40°C) werden 200 g Wasser zugegeben und die entstehenden Phasen getrennt. Die organische Phase wird mit Aktivkohle (0,25 Gew.%), Natriumhydrogencarbonat (0,4 Gew.%) sowie Filterhilfsmittel vermischt und filtriert. Das Filtrat wird mit 0,1 Gew% BHT versetzt und am Rotationsverdampfer bei 175°C, 10 mbar, von Lösemittel befreit. Man erhält 253g methacrylfunktionelles MQ-Harz der Zusammensetzung (NMR) M(0,63)D(0,95)T' (0,056)Q , wobei T'den Methacryloxypropylsiloxyrest bedeutet, das laut GPC folgende Molekulargewichte aufweist: Mw 4600 g/mol, Mn 2200 g/mol.

### Beispiel 8

In einen 3-Halskolben, versehen mit Rührer, Intensivrückflusskühler, dessen Kühlmittel auf -20°C gekühlt wird, sowie zwei Zulaufgefäßen, werden unter Rühren im Laufe von 15 min gleichzeitig 236 g Tetrachlorsilan und 291 g Ethanol (mit 8 Gew.% Wassergehalt) zudosiert. Die freigesetzte HCl gast über den Kühler (-20°C) aus, kondensierbare Anteile werden in das Reaktionsmedium zurückgeführt, das Reaktionsgemisch erwärmt sich im Laufe der Alkoxylierung auf 48°C. Man lässt weitere 10 min ausgasen und gibt dann 300 g Toluol sowie 120 g Trimethylchlorsilan zu und rührt weitere 10 min ohne Wärmeeintrag (Temperatur 32°C). Anschließend fügt man während 10 min eine Mischung aus 45 g Ethanol und 22 g Wasser hinzu, danach während weiterer 10 min 65 g Wasser. Danach werden 400 g Polydimethylsiloxan, das eine Kettenlänge von ca. 60 Siloxaneinheiten und Silanolendgruppen aufweist, hinzugefügt. Nach einer Reaktionszeit von 30 min gibt man 13,5 g Trimethylchlorsilan sowie weitere 400g Polydimethylsiloxan hinzu. Nach weiteren 5 min wird mit 200 g Wasser die Reaktion abgebrochen. Die organische Phase der zweiphasigen Reaktionsmischung wird abgetrennt, mit Aktivkohle (0,25 Gew.%), Natriumhydrogencarbonat (0,4 Gew.%) sowie Filterhilfsmittel vermischt und filtriert. Das Filtrat wird am Rotationsverdampfer bei 175°C, 10 mbar, von Lösemittel befreit. Man erhält 880 g farblose Flüssigkeit der Zusammensetzung M(0,88)QD(7,5). Mw 7900 g/mol; Mn 3700 g/mol.

### Beispiel 9

300 g Siliconharz aus Beispiel 8 werden zusammen mit 30 g Geniosil^{®} GF 95 und 0,3 g 25%iger wässriger KOH-Lösung in 180 g Toluol gelöst. Die Lösung wird unter Normaldruck 30 min lang auf eine Temperatur von 125 °C erhitzt, wobei ca. 100 ml Flüssigkeit abdestillieren. Der Rückstand wird anschließend in 100 g Toluol aufgenommen, dann mit 0,25 Gew.% Aktivkohle, 0,4 Gew.% Natriumhydrogencarbonat sowie 0,33 Gew.% Filterhilfsmittel versetzt und schließlich filtriert. Nach dem Abdampfen (bis 175°C, 10 mbar, 5 min) des Lösungsmittels aus dem Filtrat erhält man 288 g farblose Flüssigkeit. Diese weist gemäß NMR-Analytik folgende eine Zusammensetzung auf: M(0,85)QD(0,72)DDAEAP(0,21), wobei DDAEAP die Dimethylaminoethylenaminopropylmethylsiloxygruppe bezeichnet. Gemäß GPC wurden folgende Molekulargewichte erhalten: Mw 6500; Mn 2800.

## Patentansprüche

1. Verfahren zur Herstellung von Organopolysiloxanen, wobei in einem ersten Schritt Tetrachlorsilan mit einem Gemisch aus 1,0 bis 7,0 Mol einwertigem Alkohol je Mol Tetrachlorsilan und 0 bis 2 Mol Wasser, je Mol Tetrachlorsilan umgesetzt wird,
in einem zweiten Schritt wird das im ersten Schritt erhaltene Reaktionsgemisch ("Teilalkoxylat") mit einem in Wasser unlöslichen organischen Lösungsmittel mit einer Dichte von unter 0,95 kg/l sowie mit einem monofunktionellen Silan der Formel R₃SiX vermischt, wobei R gleich oder verschieden sein kann und einen einwertigen organischen Rest oder Wasserstoff und X eine hydrolysierbare Gruppe bedeutet, wobei dieser Mischung unter Rühren Wasser in Mengen von 0,2 bis 100 Mol Wasser je Mol Si-Komponente zudosiert wird, und wobei
in einem dritten Schritt nach Beendigung der Hydrolysewasserzugabe gegebenenfalls nochmals ein monofunktionelles Silan der Formel R₃SiX oder ein Disiloxan mit der Formel R₃SiOSiR₃ zugegeben werden kann, wobei R, X die oben angegebene Bedeutung haben,
das **dadurch gekennzeichnet ist, dass** die Einsatzmenge des im zweiten Schritt zugegebenen monofunktionellen Silans zwischen 0,43 und 2 Mol bezogen auf 1 Mol Tetrachlorsilan liegt.

2. Verfahren nach Anspruch 1, **dadurch gekennzeichnet, dass** im zweiten Schritt das im ersten Schritt erhaltene Reaktionsgemisch ("Teilalkoxylat") mit einem in Wasser unlöslichen organischen Lösungsmittel mit einer Dichte von unter 0,95 kg/l sowie mit einem Disiloxan der Formel R₃SiOSiR₃ vermischt wird, wobei R gleich oder verschieden sein kann und einen einwertigen organischen Rest oder Wasserstoff bedeutet, wobei dieser Mischung unter Rühren Wasser in Mengen von 0,2 bis 100 Mol Wasser je Mol Si-Komponente zudosiert wird, und wobei die Einsatzmenge des im zweiten Schritt zugegebenen Disiloxans zwischen 0,22 und 1 Mol bezogen auf 1 Mol Tetrachlorsilan liegt.

3. Verfahren nach Anspruch 1 oder 2, **dadurch gekennzeichnet, dass** im zweiten Schritt zusätzlich zu den genannten Einsatzstoffen vor, während oder nach der Wasserdosierung zweiwertige Silane der Formel R₂SiX₂ oder deren Hydrolysenprodukte R'(R₂SiO_{2/2})ₙR' zugesetzt werden, wobei R, X die oben angegebene Bedeutung haben und R' ein einwertiger organischer Rest oder Wasserstoff ist und n eine Zahl zwischen 2 und 10000 bedeutet.

4. Verfahren nach Anspruch 1, 2 oder 3, **dadurch gekennzeichnet, dass** im zweiten Schritt ein acrylat- oder methacrylatfunktionelles Silan in einer Menge von 1 - 20 Mol%, bezogen auf in der ersten Stufe eingesetztes Tetrachlorsilan eingesetzt wird.

5. Verfahren gemäß Anspruch 1 -3, **dadurch gekennzeichnet, dass** das im dritten Schritt erhaltene Reaktionsprodukt bei einem pH von 8 bis 14 in Anwesenheit von Base und einem wasserunlöslichen organischen Lösungsmittel bei einer Temperatur von 120 - 180°C und einem Druck zwischen 900 und 2000 hPa umgesetzt wird, wobei Wasser sowie Alkohol nahezu vollständig abdestilliert wird.

6. Verfahren nach Anspruch 5, **dadurch gekennzeichnet, dass** das Reaktionsprodukt eine Polydispersität kleiner 2 hat.

7. Verfahren nach Anspruch 5, **dadurch gekennzeichnet, dass** die Umsetzung in Anwesenheit von Base sowie einem aminofunktionellen Silan, das in Mengen von 0,5 - 25 Gew.%, bezogen auf das im dritten Schritt erhaltene Polyorganosiloxanharz eingesetzt wird, durchgeführt wird.

## Claims

1. Process for preparing organopolysiloxanes which comprises
a first step of reacting tetrachlorosilane with a mixture of 1.0 to 7.0 mol of monohydric alcohol per mol of tetrachlorosilane and 0 to 2 mol of water per mol of tetrachlorosilane,
a second step of the reaction mixture obtained in the first step ("partial alkoxylate") being mixed with a water-insoluble organic solvent having a density of below 0.95 kg/l and also with a monofunctional silane of the formula R₃SiX, where R is a monovalent organic moiety or hydrogen and may be the same or different in each occurrence and X is a hydrolyzable group, and water being dosed into this mixture under agitation in amounts of 0.2 to 100 mol of water per mol of silicon component, and
a third step where completion of hydrolysis water addition may optionally be followed by adding once more a monofunctional silane of the formula R₃SiX or a disiloxane having the formula R₃SiOSiR₃, where R and X are each as defined above,
which process is **characterized in that** the amount of monofunctional silane added in the second step is between 0.43 and 2 mol based on 1 mol of tetrachlorosilane.

2. Process according to Claim 1, **characterized in that** the second step comprises the reaction mixture obtained in the first step ("partial alkoxylate") being mixed with a water-insoluble organic solvent having a density of below 0.95 kg/l and also with a disiloxane of the formula R₃SiOSiR₃, where R is a monovalent organic moiety or hydrogen and may be the same or different in each occurrence, water is dosed into this mixture under agitation in amounts of 0.2 to 100 mol of water per mol of silicon component, and the amount of disiloxane added in the second step is between 0.22 and 1 mol based on 1 mol of tetrachlorosilane.

3. Process according to Claim 1 or 2, **characterized in that** divalent silanes of the formula R₂SiX₂ or their hydrolysis products R'(R₂SiO_{2/2})ₙR', where R and X are each as defined above, R' is a monovalent organic moiety or hydrogen and n is a number between 2 and 10 000, are added in the second step in addition to the cited feedstocks before, during or after the water dosing.

4. Process according to Claim 1, 2 or 3, **characterized in that** the second step utilizes an acrylate- or methacrylate-functional silane in an amount of 1 - 20 mol%, based on tetrachlorosilane used in the first step.

5. Process according to Claim 1-3, **characterized in that** the reaction product obtained in the third step is converted at a pH of 8 to 14 in the presence of a base and of a water-insoluble organic solvent at a temperature of 120 - 180°C and a pressure between 900 and 2000 hPa, while water and also alcohol is distilled off virtually completely.

6. Process according to Claim 5, **characterized in that** the reaction product has a polydispersity below 2.

7. Process according to Claim 5, **characterized in that** the' conversion is carried out in the presence of a base and also of an amino-functional silane used in amounts of 0.5 - 25 wt%, based on the polyorganosiloxane resin obtained in the third step.

## Revendications

1. Procédé pour la préparation d'organopolysiloxanes, dans lequel dans une première étape on fait réagir du tétrachlorosilane avec un mélange de 1,0 à 7,0 moles d'alcool monovalent par mole de tétrachlorosilane et 0 à 2 moles d'eau, par mole de tétrachlorosilane,
dans une deuxième étape on mélange le mélange réactionnel (« produit d'alcoxylation partielle »), obtenu dans la première étape, avec un solvant organique insoluble dans l'eau, ayant une densité inférieure à 0,95 kg/l, ainsi qu'avec un silane monofonctionnel de formule R₃SiX, R pouvant être le même ou différent et représentant un radical organique monovalent ou un atome d'hydrogène et X représentant un groupe hydrolysable, en ajoutant à ce mélange par addition dosée, sous agitation, de l'eau en des quantités de 0,2 à 100 moles d'eau par mole de composant silicié, et dans lequel
dans une troisième étape, une fois terminée l'addition d'eau pour l'hydrolyse, on peut éventuellement ajouter encore un silane monofonctionnel de formule R₃SiX ou un disiloxane de formule R₃SiOSiR₃, R, X ayant la signification indiquée ci-dessus,
qui est **caractérisé en ce que** la quantité utilisée du silane monofonctionnel ajouté dans la deuxième étape est comprise entre 0,43 et 2 moles par rapport à 1 mole de tétrachlorosilane.

2. Procédé selon la revendication 1, **caractérisé en ce que** dans la deuxième étape on mélange le mélange réactionnel (« produit d'alcoxylation partielle »), obtenu dans la première étape, avec un solvant organique insoluble dans l'eau, ayant une densité inférieure à 0,95 kg/l, ainsi qu'avec un disiloxane de formule R₃SiOSiR₃, R pouvant être le même ou différent et représentant un radical organique monovalent ou un atome d'hydrogène, en ajoutant à ce mélange par addition dosée, sous agitation, de l'eau en des quantités de 0,2 à 100 moles d'eau par mole de composant silicié, et la quantité utilisée du disiloxane ajouté dans la deuxième étape étant comprise entre 0,22 et 1 mole par rapport à 1 mole de tétrachlorosilane.

3. Procédé selon la revendication 1 ou 2, **caractérisé en ce que** dans la deuxième étape on ajoute en outre aux substances de départ nommées, avant, pendant ou après l'addition dosée d'eau, des silanes divalents de formule R₂SiX₂ ou leurs produits d' hydrolyse R' (R₂SiO_{2/2})ₙR', où R, X ont la signification indiquée plus haut et R' représente un radical organique monovalent ou un atome d'hydrogène et n représente un nombre compris entre 2 et 10 000.

4. Procédé selon la revendication 1, 2 ou 3, **caractérisé en ce que** dans la deuxième étape on utilise un silane à fonction acrylate ou méthacrylate en une quantité de 1 - 20 % en moles, par rapport au tétrachlorosilane utilisé dans la première étape.

5. Procédé selon la revendication 1 - 3, **caractérisé en ce que** le produit de réaction obtenu dans la troisième étape est converti à un pH de 8 à 14 en présence d'une base et d'un solvant organique insoluble dans l'eau, à une température de 120 - 180 °C et sous une pression comprise entre 900 et 2 000 hPa, l'eau ainsi que l'alcool étant presque totalement éliminés par distillation.

6. Procédé selon la revendication 5, **caractérisé en ce que** le produit de réaction a une polydispersité inférieure à 2.

7. Procédé selon la revendication 5, **caractérisé en ce qu'**on effectue la conversion en présence d'une base ainsi que d'un silane à fonction amino, qui est utilisé en des quantités de 0,5 - 25 % en poids, par rapport à la résine polyorganosiloxane obtenue dans la troisième étape.
